(19) Europäisches Patentamt
European Patent Office
Office européen des brevets

(11) Veröffentlichungsnummer: **0 211 365**
**B1**

(12) **EUROPÄISCHE PATENTSCHRIFT**

(45) Veröffentlichungstag der Patentschrift: **07.11.90**

(21) Anmeldenummer: **86110346.3**

(22) Anmeldetag: **26.07.86**

(51) Int. Cl.[5]: **C 04 B 28/06,** C 04 B 28/04 // (C04B28/06, 22:00, 22:06, 22:10, 22:14, 24:06),(C04B28/04, 22:00, 22:06, 22:10, 22:14, 24:06)

# (54) Schnellzement.

(30) Priorität: **03.08.85 DE 3527978**

(43) Veröffentlichungstag der Anmeldung:
**25.02.87 Patentblatt 87/09**

(45) Bekanntmachung des Hinweises auf die Patenterteilung:
**07.11.90 Patentblatt 90/45**

(84) Benannte Vertragsstaaten:
**AT BE CH DE FR GB IT LI LU NL SE**

(56) Entgegenhaltungen:
**EP-A-0 151 452**
**DE-A-3 322 067**
**FR-A-1 452 567**
**FR-A-2 289 460**
**US-A-3 997 353**

**Die Akte enthält technische Angaben, die nach dem Eingang der Anmeldung eingereicht wurden und die nicht in dieser Patentschrift enthalten sind.**

(73) Patentinhaber: **SICOWA Verfahrenstechnik für Baustoffe GmbH & Co. KG**
**Handerweg 17**
**D-5100 Aachen (DE)**

(72) Erfinder: **Koslowski, Thomas, Dr.**
**Buschmühle 1**
**D-5100 Aachen (DE)**

(74) Vertreter: **Sparing Röhl Henseler Patentanwälte**
**European Patent Attorneys**
**Rethelstrasse 123**
**D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft einen Schnellzement, enthaltend reaktive Calciumsilikate und reaktive Aluminate.

Das System Portlandzement-Tonerdezement (PZ-TZ) wurde bereits mehrfach untersucht, vgl. Firmenprospekt der Fa. Lafarge Fondu International, N5 0682, "Ciment Fondu Lafarge—Eigenschaften und Anwendungen" oder M. Balsevics, "Entwicklung und Eigenschaften von Schnellzementen", Dissertation, Aachen 1980. Hieraus ergibt sich, daß in dem PZ-TZ-System bezüglich der Festigkeit eine erhebliche Abnahme der erzielbaren Werte eintritt, wenn man über 20 Gew.-Teile PZ bzw. TZ und 80 Gew.-Teile TZ bzw. PZ hinausgeht, wobei es keine wesentliche Rolle spielt, ob man die PZ-TZ-Mischung als solche oder etwa zu einem Mörtel verarbeitet untersucht. In diesem Bereich erhält man ferner praktisch keine Verarbeitbarkeit, die Festigkeitsbildung beginnt unmittelbar nach dem Anmachen. Es sind zwar eine Reihe von Verzögerern für Portland- bzw. Tonerdezement bekannt, jedoch gelingt es mit diesen nicht oder nur ungenügend verarbeitbar Schnellzemente mit hoher Frühfestigkeit herzustellen.

Aus der FR—A—2 289 460 ist ein Schnellzement bekannt, der Calciumhydroxid, Tonerdezement, wasserfreies Calciumsulfat und einen Verzögerer derart enthält, daß er zu Ettringit hydratisiert, wobei im kalkarmen Milieu gearbeitet und sehr schnell Festigkeit ähnlich wie bei Gips erhalten wird.

Aufgabe der Erfindung ist es, einen Schnellzement der eingangs genannten Art zu schaffen, der eine einstellbar, genügend offene Zeit aufweist, die seine Verarbeitbarkeit nach dem Anmachen gewährleistet, und der eine hohe Frühfestigkeit zeigt.

Diese Aufgabe wird gelöst durch einen Schnellzement, enthaltend reaktive Calciumsilikate und reaktive Aluminate, gekennzeichnet durch einen Gehalt an

a. 6 bis 75 Gew.-Teilen reaktive Calciumsilikate,
b. 9 bis 60 Gew.-Teilen reaktive Aluminate, berechnet als CA,
c. 0,5 bis 14 Gew.-Teilen Calciumsulfathalbhydrat und/oder Anhydrit-III,
d. 2 bis 46 Gew.-Teilen Calciumsulfatanhydrit-II,
e. 3 bis 20 Gew.-Teilen Calciumhydroxid,
f. 0,2 bis 3,5 Gew.-Teilen organischem, die Keimbildung und das Wachstum von Calciumaluminatsulfathydrat hemmenden Abbindeverzögerer,

wobei der Schnellzement in einer Mischung angemacht wird und eine Reaktionskette über folgende Reaktionsprodukte: Primärettringit, Monophasen (Calciumaluminatmonosulfat), Sekundärettringit und Calciumhydrosilikat abläuft; bzw. einen Schnellzement, enthaltend reaktive Calciumsilikate und reaktive Aluminate, gekennzeichnet durch einen Gehalt an

a. 6 bis 75 Gew.-Teilen reaktive Calciumsilikate,
b. 9 bis 60 Gew.-Teilen reaktive Aluminate, berechnet als CA,
c. 0,5 bis 14 Gew.-Teilen Calciumsulfathalbhydrat und/oder Anhydrit-III,
d. 2 bis 46 Gew.-Teilen Calciumsulfatanhydrit-II,
e. 3 bis 60 Gew.-Teilen Calciumhydroxid,
f. 0,2 bis 4 Gew.-Teilen organischem, die Keimbildung und das Wachstum von Calciumaluminatsulfathydrat hemmendem Abbindeverzögerer,

wobei der Schnellzement in zwei Mischungen, bei denen in einer die reaktiven Aluminate, der organische Abbindeverzögerer und die Calciumsulfate in kalkhydratfreier Umgebung vorgemischt werden, angemacht wird und eine Reaktionskette über folgende Reaktionsprodukte: Primärettringit, Monophasen (Calciumaluminatmonosulfat), Sekundärettringit und Calciumhydrosilikat abläuft.

Durch die Kombination von Calciumhydroxid, -sulfathalbhydrat, -sulfatanhydrit-II und organischem Abbindeverzögerer wird eine Verzögerung des Erstarrungsbeginns der reaktiven Calciumsilikate und Aluminate, die eine genügende Verarbeitungszeit beläßt (es lassen sich Verzögerungszeiten bis zu mehreren Stunden je nach Zusammensetzung einstellen), und nach der Verzögerung ein beschleunigtes Erstarren der reaktiven Calciumsilikate und Aluminate erzielt.

Insbesondere sind 10 bis 70 Gew.-Teile reaktive Calciumsilikate und/oder 12 bis 50 Gew.-Teile reaktive Aluminate und/oder 1 bis 10 Gew.-Teile Calciumsulfathalbhydrat und/oder 3 bis 25 Gew.-Teile Calciumsulfatanhydrit-II und/oder 4 bis 18 bzw. 4 bis 40 Gew.-Teile Calciumhydroxid und/oder 0,4 bis 3,5 bzw. 0,6 bis 3 Gew.-Teile organischen Verzögerer für das Anmachen des Schnellzements in einer bzw. zwei Mischungen vorhanden.

Um eine hohe Früh- und Endfestigkeit und eine gute Langzeitbeständigkeit zu erreichen, enthält der Schnellzement insbesondere 55 bis 75 Gew.-Teile reaktive Calciumsilikate, 9 bis 22 Gew.-Teile reaktive Aluminate, 0,5 bis 6 Gew.-Teile Calciumsulfathalbhydrat, 2 bis 9 Gew.-Teile Calciumsulfatanhydrit-II, 3 bis 10 Gew.-Teile Calciumhydroxid, 0,2 bis 2 Gew.-Teile organischen Verzögerer, wobei vorzugsweise 60 bis 70 Gew.-Teile reaktive Calciumsilikate und/oder 12 bis 18 Gew.-Teile reaktive Aluminate und/oder 1 bis 4 Gew.-Teile Calciumsulfathalbhydrat und/oder 3 bis 6 Gew.-Teile Calciumsulfatanhydrit-II und/oder 4 bis 7 Gew.-Teile Calciumhydroxid und/oder 0,4 bis 1,2 Gew.-Teile organischen Abbindeverzögerer vorhanden sind. Hierbei kann der Schnellzement als fertige Mischung hergestellt sein, jedoch könnten auch die reaktiven Aluminate, der organische Abbindeverzögerer und die Calciumsulfate in kalkhydratfreier Umgebung vorgemischt werden. Solche Schnellzemente eignen sich beispielsweise zur Herstellung von Betonprodukten, von Mörteln für Estriche, Putze, Ausbesserungen, Befestigen von Dübeln und Ankern, Verlegearbeiten und Befestigungsmaßnahmen, Vergußmörtel o.dgl.

Insbesondere kann der Schnellzement, um eine Superschnellerstarrung mit hoher Frühfestigkeit, jedoch verhältnismäßig geringer Endfestigkeit zu erreichen, auch 6 bis 35 Gew.-Teile reaktive Silikate, 38 bis 60 Gew.-Teile reaktive Aluminate, 2 bis 14 Gew.-Teile Calciumsulfathalbhydrat, 8 bis 35 Gew.-Teile Calciumsulfatanhydrit-II, 4 bis 20 bzw. 10 bis 60 Gew.-Teile Calciumhydroxid, 0,5 bis 3,5 bzw. 0,2 bis 4 Gew.-Teile organischen Abbindeverzögerer zum Anmachen des Schnellzements in einer bzw. zwei Mischungen enthalten, wobei vorzugsweise 10 bis 25 Gew.-Teile reaktive Calciumsilikate und/oder 42 bis 50 Gew.-Teile reaktive Aluminate und/oder 4 bis 10 Gew.-Teile Calciumsulfathalbhydrat und/oder 10 bis 25 Gew.-Teile Calciumsulfatanhydrit-II und/oder 8 bis 18 bzw. 12 bis 40 Gew.-Teile Calciumhydroxid und/oder 0,8 bis 3,5 bzw. 0,6 bis 3 Gew.-Teile organischen Abbindeverzögerer für das Anmachen des Schnellzements in einer bzw. zwei Mischungen vorhanden sind. Solche Schnellzemente werden beispielsweise zur Herstellung von Spritzbeton, Boden- und Gesteinsverpressungen (auch untertage) oder zur Herstellung von Zwischenprodukten, wobei insbesondere eine zwischenzeitliche Fixierung bestimmter Stoffe und Strukturen angestrebt wird, verwendet.

Der Schnellzement ermöglicht es, je nach Zusammensetzung Topfzeiten von mindestens etwa 20 min bis zu mehreren Stunden, beispielsweise 2 bis 4 Stunden, erinzustellen. Die Topfzeit läßt sich vor allem durch entpsrechende Mengen an Calciumsulfathalbhydrat und organischem Abbindeverzögerer variieren. Als Calciumsulfathalbhydrat eignet sich beispielsweise Stuckgips, als organischer Abbindeverzögerer eignet sich beispielsweise eine Oxycarbonsaure, etwa Wein-, Apfel-, Glukon- oder Zitronensäure sowie deren Salze. Und zwar eignen sich solche organischen Abbindeverzögerer, die eine hohe Löslichkeit in Wasser, eine hohe Lösungsgeschwindigkeit aufweisen sowie schwerlösliche Salze mit Calcium bzw. Aluminium bilden. Insbesondere eignet sich Zitronensäuremonohydrat. Die Säuren bzw. deren Salze können auch in Mischung verwendet werden. Da es sich um eine Fertigmörtelmischung handelt, versteht es sich, daß die organischen Abbindeverzögerer pulverförmig in der Mörtelmischung enthalten sind.

Für die Topfzeit eines mit dem Schnellzement angemachten Mörtels ist eine Mindestmenge an Calciumsulfathalbhydrat wegen der hohen Lösungsgeschwindigkeit und Löslichkeit hiervon notwendig, jedoch sollte die Menge an Halbhydrat andererseits auch so gering wie möglich gehalten werden. Das Halbhydrat kann auch gegebenenfalls ganz oder teilweise durch Anhydrit-III ersetzt werden, der ebenfalls eine sehr hohe Lösungsgeschwindigkeit und Löslichkeit in Wasser aufweist. Für die Einstellung der Topfzeit ist Anhydrit-II ungeeignet, während das Dihydrat nur geringen Einfluß ausüben kann.

Durch die Schnellerhärtung nach Beendigung der Topfzeit ergibt sich sehr schnell eine hohe Frühfestigkeit infolge einer steilen Erstarrungscharakteristik. Im Frühbereich finden vorrangig die Reaktionen der reaktiven Aluminate mit Calciumhydroxid und weiter mit Anhydrit-II statt. Die sich hierbei bildenden Reaktionsprodukte sind zunächst dominant Monophasen (Calciumaluminatmonosulfat) und später Ettringit, der nadelförmig und langprismatisch ausgebildet ist. Zusätzlich verstärkt sich der Einfluß der sich verspätet bildenden Calciumhydrosilikate. Durch diese Vorgänge werden praktisch in zwei gegebenenfalls ineinander übergehende Stufen die Formänderungen im Frühbereich gesteuert. Durch Einstellung des Verhältnisses der reaktiven Aluminate zu den reaktiven Calciumsilikaten, zum Calciumhydroxid und zum Anhydrit-II lassen sich diese Formänderungen im Frühbereich steuern, und zwar vorzugsweise derart, daß zunächst durch Ausbildung der plättchenförmigen Monophasen eine Volumenexpansion (das Druckspannungen erzeugt) in einer ersten Stufe stattfindet, das dem Schwinden (das Zugspannungen erzeugt) während dieses Zeitraumes entgegenwirkt, während anschließend durch die Ettringitbildung eine Volumenexpansion in einer weiteren Stufe stattfindet, das dem normalerweise auftretenden Schwinden während dieses Zeitraumes entgegenwirkt. Es läßt sich auch eine absolute Volumenvergrößerung etwa eines mit dem Schnellzement hergestellten Mörtels durch entsprechende Wahl der Gewichtsteiles einstellen.

Die Endfestigkeit des erhaltenen Produktes, etwa ein Betonteil, Estrich, Putz o.dgl., ergibt sich hauptsächlich durch die Reaktion der reaktiven Calciumsilikate mit Wasser, hierbei bilden sich CSH-Phasen. Durch Veränderung des Verhältnisses der reaktiven Calciumsilikate zu den reaktiven Aluminaten werden auch die Endfestigkeiten beeinflußt und können hierdurch entsprechend eingestellt werden.

Der Anhydrit-II spielt bei der Steuerung der Schnellerstarrung infolge seiner Reaktionsträgheit nur eine untergeordnete Rolle. Während das Halbhydrat bei der Bildung von Primärettringit und der Monophasen verbraucht wird, bleibt der Anhydrit-II größtenteils erhalten und kann nun, nachdem die Aluminate ausreagiert sind, mit den vergleichsweise Al-reichen und $SO_4$-armen Monophasen und nicht reagiertem Restaluminat zu dem $SO_4$-reicheren Sekundärettringit, der durch seinen langstrahligen, faserigen Habitus ein sehr günstiges Verfilzen und Verwachsen der Restmonophasen und der übrigen Restkomponenten bewirkt, gemäß folgender Reaktion regieren

$$C_3ACs \cdot H_{12}+2Cs+20H \rightarrow C_3A3Cs \cdot H_{32}$$

Die Sekundärettringitbildung ist mit einem weiteren Festigkeitsanstieg verbunden.

Anhydrit-II kann mit einer Blaine-Oberfläche von 1000 bis 10000 $cm^2/g$, insbesondere 3000 bis 8000 $cm^2/g$, verwendet werden, gewöhnlich wird er in Zementfeinheit bis Kalkhydratfeinheit verwendet.

Sowohl Zitronensäure (oder die ansonsten verwendete organische Verbindung) als auch Halbhydrat und Anhydrit stellen Abbindeverzögerer für reaktives Aluminat—etwa vom Tonerdezement—dar (ggf. kann Sulfat aber auch die Reaktion von reinem Tonerdezement beschleunigen), wirken jedoch alleine nicht in

kalkhydratreichen Systemen, da sie dann das reaktive Aluminat nicht genügend gegen das Kalkhydrat abschirmen und dadurch auch keine Abbindeverzögerung herbeiführen können. Überraschenderweise hat es sich jedoch gezeigt, daß durch die Kombination dieser Abbindeverzögerer reaktives Aluminat auch in kalkhydratreicher Umgebung, d.h. in solcher Umgebung, in der wenigstens etwa 30% des zur stöchiometrischen Reaktion mit dem Aluminat erforderlichen Kalkhydrats (als solches zugegeben oder durch Löschen von Branntkalk im angemachten Mörtel in der Anfangsphase fortlaufend entstehend) vorhanden ist, in gewünschter Weise verzögert werden kann.

Die reaktiven Calciumsilikate umfassen $C_3S$, $C_2S$ und $C_2AS$. Als reaktive Aluminate eignen sich $C_3A$, CA, $C_{12}A_7$ und $C_4AF$ (letzterer ist aber weniger reaktiv als die vorstehenden). Als reaktive Aluminate können CA bzw. $C_{12}A_7$ alleine oder in Kombination und mit den übrigen aufgeführten Aluminaten verwendet werden, jedoch ist eine CA- oder $C_{12}A_7$-komponente erforderlich, da nur diese mit Kalkhydrat zu Monophasen und Ettringit reagieren können. $C_{12}A_7$ kann fluorstabilisiert sein. Stattdessen oder zusammen mit den aufgeführten reaktiven Aluminaten kann auch schwer lösliches Aluminiumsulfat verwendet werden.

Abhängig von der erforderlichen Verzögerungszeit, der Erstarrungscharakteristik und der anzustrebenden Volumenvergrößerung im Frühbereich kann das Verhältnis von reaktiven Aluminaten, berechnet als CA, zum Gesamtsulfatgehalt von etwa 5:1 bis etwa 1:1, insbesondere von 3:1 bis 2:1, gewählt werden. Außerdem ist ein gewisser Sulfatgehalt notwendig, um Monophasen und Ettringit zu stabilisieren und keine unerwünschten Umwandlungsprodukte wie Hydrogranat und Gehlenithyrat zu erzeugen. Insgesamt bleibt man aber bei den vorstehend genannten Verhältnissen bei einem sehr niedrigen Sulfatgehalt, der eine Langzeitraumbeständigkeit sicherstellt. Außerdem führt der niedrige Sulfatgehalt zu verbesserter Warmbehandlungsverträglichkeit.

In Kombination mit den aufgeführten reaktiven Calciumsilikaten können auch latenthydraulische Stoffe, beispielsweise Hochofenschlacke und puzzolanisch-hydraulische Stoffe verwendet werden.

Calciumhydroxid kann gegebenenfalls als Branntkalk eingebracht werden, u.a. teilweise oder ganz als Freikalkgehalt von Portlandzement.

Calciumhydroxid kann auch teilweise ersetzt werden durch ein lösliches Calciumcarbonat und/oder durch ein lösliches wasserhaltiges Magnesiumcarbonat.

Calciumsulfathalbhydrat kann vorzugsweise als Stuckgips oder etwa auch als Autoklavgips eingebracht werden.

Calciumsulfatanhydrit-II wird vorzugsweise in Form von fein aufgemahlenem Naturanhydrit oder als Chemieanhydrit, und zwar in schwer löslicher bis unlöslicher Form verwendet. Falls lösliche Anteile im Anhydrit vorhanden sind, ist dies bei der Dosierung des Calciumsulfathalbhydrates zu berücksichtigen.

Das Verhältnis zwischen reaktiven Aluminaten und Calciumhydroxid ist vorzugsweise kleiner oder gleich 5, insbesondere kleiner als 3, um die gewünschte Schnellerstarrungscharakteristik über die Monophasen zu erhalten.

Das Calciumsulfatanhydrit und/oder -halbhydrat kann partiell durch Calciumsulfatdihydrat ersetzt werden, um den Übergang zwischen den Formänderungsstufen zu glätten. Letzeres kann aber auch durch die Wahl des Anhydrits-II bewirkt werden.

Eine Erhöhung der Menge an reaktiven Calciumsilikaten erhöht die Endfestigkeit. Eine Erhöhung der Menge an reaktiven Aluminaten erhöht die Früh- und Endfestigkeit. Eine Erhöhung des Calciumhydroxidgehalts erhöht im Zusammenhang mit einer Erhöhung der reaktiven Aluminate die erste Stufe der Frühfestigkeit und ergibt eine steilere Erstarrungscharakteristik. Eine Erhöhung des Calciumsulfathalbhydratgehaltes führt zu einer Verlängerung der Topfzeit und einer Abflachung der Erstarrungscharakteristik. Eine Erhöhung des Calciumsulfatanhydrit-II-Gehaltes im Zusammenhang mit einer Erhöhung der reaktiven Aluminate führt zu einer Erhöhung der Schwindkompensation im Frühbereich und damit der Frühfestigkeit. Eine Vergrößerung der Menge an eingesetztem organischem Verzögerer führt zu einer Verlängerung der Topfzeit und einer Abflachung der Erstarrungscharakteristik.

Kalkhydrat und Sulfat sind zweckmäßigerweise in solchen Mengen zu verwenden, daß sich möglichst kein Hydrogranat bildet, um auf diese Weise eine Phasenstabilisierung und damit einer Stabilisierung der Langzeitfestigkeit zu erhalten, wenn es hierauf ankommt.

Eine mit dem Schnellzement hergestellte Mörtelmischung muß, um zusätzlich zu einer geringen Langzeitschwindung zu führen, einen Mindestgehalt an Calciumhydroxid abspaltenden Verbindungen, beispielsweise $C_3S$, enthalten, damit wenigstens bis zum Erreichen der Endfestigkeit ein hochalkalisches Milieu aufrechterhalten bleibt. Dies ist insbesondere bei luftporosierten Mörteln zweckmäßig, um den Ettringit vor Carbonatisierung zu schützen.

Zur Erzielung der angestrebten Zusammensetzung kann man eine Mischung aus Portland- und Tonerdezement, nämlich 5 bis 90 Gew.-Teile PZ und 10 bis 95 Gew.-Teile TZ, insbesondere 90 bis 70 Gew.-Teile PZ und 10 bis 30 Gew.-Teile TZ bzw. 15 bis 30 Gew.-Teile PZ und 95 bis 70 Gew.-Teile TZ-wobei aber auch der mittlere Bereich um 50 Gew.-Teile PZ und TZ durch die erfindungsgemäße Verzögerung zugänglich wird und sich beispielsweise zur Herstellung von Vergußmörteln eignet—verwenden, wobei die zuzusetzenden Mengen an Halbhydrat und Anhydrit-II sowie an Calciumhydroxid auf den Gehalt und die Art des Sulfats bzw. den Freikalkgehalt des Portland-Zements abzustimmen ist. Anstelle des Portlandzements läßt sich auch vorteilhalft ein Portlandzementklinker—auf Zementfeinheit gemahlen—einsetzen, wobei dann das gesamte Sulfat getrennt zu dosieren ist.

Als Zuschläge für eine aus dem Schnellzement hergestellte Beton- oder Mörtelmischung kommen

beispielsweise Quarzsand, Quarzmehl, Kalksteinmehl oder -sand, Flugasche oder dergleichen infrage, die das Stützgerüst bilden. Die Zuschläge sind gegebenenfalls in üblicher Weise auf eine stetige Sieblinie abzustimmen. Bei Verwendung zur Herstellung eines Dekorputz, etwa Kratzputz, kann auch eine Ausfallkörnung gewählt werden. Auch können mineralische oder organische Fasern beigemengt werden. Man kann ein Armierungsgewebe einbetten.

Als Zusatzmittel und -stoffe kommen beispielsweise Dichtmittel, Verflüssiger, Haftverbesserer, Hydrophobierungsmittel, Frostschutzmittel, Stabilisatoren, Mittel zur Verbesserung des Wasserrückhaltevermögens, zur Verbesserung der Verarbeitbarkeit, Luftporenbildner, Pigmente, der dergleichen infrage. Der Anteil des Bindemittels an der Mörtelmischung liegt im allgemeinen im Bereich zwischen 20 und 40 Gewichtsteilen.

Beschleuniger kann in einer Menge bis 1 Gew.-Teil bezogen auf das Bindemittel zugesetzt werden. Insbesondere kommen hierzu Alkalisalze infrage, etwa Lithiumverbindungen wie $Li_2CO_3$, $Li(OH)$, ferner $Na_2CO_3$, $Na(OH)$, $K_2CO_3$, $K(OH)$ oder Wasserglas, etwa K- oder Na-Wasserglas, in trockener kristalliner Form. Ein Alkaligehalt, bereichnet als $Na_2O$, unter 0,6 Gew.-Teilen wird bevorzugt.

Die Dosierung des Anmachwassers und gegebenenfalls Verflüssigers bestimmt sich durch die Anforderungen an die Verarbeitbarkeit und dem Anwendungszweck. Im Frühbereich wird Wasser durch Monophasen- und Ettringitbildung gebunden, wodurch sich eine schnelle und relativ gleichmäßige Austrocknung ergibt. Die Verwendung eines Verflüssigers, gegebenenfalls eines Superverflüssigers trägt zur Langzeitfestigkeit bei.

Beispiel:

Unter Verwendung von 30,25 Gew.-Teilen eines erfindungsgemäßen Schnellzementes wurde eine Mörtelmischung weiter umfassend 69,75 Gew.-Teile Zuschläge und Zusätze hergestellt:

| | |
|---|---|
| Portlandzement 45 F | 25,380 Gew.-Teile |
| Tonerdezement (50% $Al_2O_3$) | 2,870 Gew.-Teile |
| Calciumsulfatanhydrit-II | 0,540 Gew.-Teile |
| Calciumsulfathalbhydrat | 0,116 Gew.-Teile |
| Zitronensäuremonohydrat | 0,144 Gew.-Teile |
| Calciumhydroxid | 1,200 Gew.-Teile |
| Quarzitisch 0,1 bis 0,6 mm | 65,85 Gew.-Teile |
| Zusätze nach DIN 18550 wie Cellulosederivate, Hydrophobierungsmittel, Metallseife, Pulverdispersion und Silicone | 3,9 Gew.-Teile |

Mit 29 Gew.-Teilen Wasser angemacht ergibt sich eine Mörtelmischung mit einem Luftporengehalt von 33 Vol.-%, die eine Topfzeit von ca. 300 min (bei 20°C) besitzt und dann mit einer steilen Charakteristik erstarrt. Das Erstarrungsverhalten ist in Fig. 1 dargestellt. Die Topfzeit verschiebt sich bei höheren Temperaturen zu kürzeren Zeiten und bei niedrigeren Temperaturen zu höheren Zeiten, bei 15°C beträgt sie etwa 330 min, bei 30°C etwa 180 min.

Das Frühverformungsverhalten ist derart, daß sich nach einer Volumenkontraktion von ca. 0,15 Vol.-% in den ersten 60 min nach dem Anmachen eine zweistufige Expansion um jeweils ca. 0,05 Vol.-% ergibt, vgl. Fig. 2. Die beiden Expansion entsprechen der Ausbildung der Monophasen bzw. des Ettringits.

Die angemachte Mörtelmischung aufgetragen auf verschiedene Untergründe verhält sich problemlos und führt zu keiner Rißbildung.

Bezüglich der Definition der Calciumsulfatphasen, etwa Anhydrit-II, wird beispielsweise auf Winnacker, Küchler, Chemische Technologie, München 1983, Band III, S. 263 ff. verwiesen. Portland- und Tonerdezementzusammensetzungen sind beispielsweise im Zement-Taschenbuch, Wiesbaden 1984, S. 49 ff., herausgegeben vom Verein Deutscher Zementwerke, aufgeführt.

**Patentansprüche**

1. Schnellzement enthaltend reaktive Calciumsilikate und reaktive Aluminate, gekennzeichnet durch einen Gehalt an

a. 6 bis 75 Gew.-Teilen reaktive Calciumsilikate,
b. 9 bis 60 Gew.-Teilen reaktive Aluminate, berechnet als CA,
c. 0,5 bis 14 Gew.-Teilen Calciumsulfathalbhydrat und/oder Anhydrit-III,
d. 2 bis 46 Gew.-Teilen Calciumsulfatanhydrit-II,
e. 3 bis 20 Gew.-Teilen Calciumhydroxid,
f. 0,2 bis 3,5 Gew.-Teilen organischem, die Keimbildung und das Wachstum von Calciumaluminatsulfathydrat hemmendem Abbindeverzögerer,

wobei der Schnellzement in einer Mischung angemacht wird und eine Reaktionskette über folgende Reaktionsprodukte: Primärettringit, Monophasen (Calciumaluminatmonosulfat), Sekundärettringit und Calciumhydrosilikat abläuft.

2. Schnellzement enthaltend reaktive Calciumsilikate und reaktive Aluminate, gekennzeichnet durch einen Gehalt an

a. 6 bis 75 Gew.-Teilen reaktive Calciumsilikate,
b. 9 bis 60 Gew.-Teilen reaktive Aluminate, berechnet als CA,
c. 0,5 bis 14 Gew.-Teilen Calciumsulfathalbhydrat und/oder Anhydrit-III,
d. 2 bis 46 Gew.-Teilen Calciumsulfatanhydrit-II,
e. 3 bis 60 Gew.-Teilen Calciumhydroxid,
f. 0,2 bis 4 Gew.-Teilen organischem, die Keimbildung und das Wachstum von Calciumaluminatsulfathydrat hemmendem Abbindeverzögerer,

wobei der Schnellzement in zwei Mischungen, bei denen in einer die reaktiven Aluminate, der organische Abbindeverzögerer und die Calciumsulfate in kalkhydratfreier Umgebung vorgemischt werden, angemacht wird und eine Reaktionskette über folgende Reaktionsprodukte: Primärettringit, Monophasen (Calciumaluminatmonosulfat), Sekundärettringit und Calciumhydrosilikat abläuft.

3. Schnellzement nach Anspruch 1, gekennzeichnet durch

10 bis 70 Gew.-Teile reaktive Calciumsilikate und/oder
10 bis 50 Gew.-Teile reaktive Aluminate und/oder
1 bis 10 Gew.-Teile Calciumsulfathalbhydrat und/oder
3 bis 25 Gew.-Teile Calciumsulfatanhydrit-II und/oder
4 bis 18 Gew.-Teile Calciumhydroxid und/oder
0,4 bis 3,5 Gew.-Teile organischen Abbindeverzögerer.

4. Schnellzement nach Anspruch 2, gekennzeichnet durch

10 bis 70 Gew.-Teile reaktive Calciumsilikate und/oder
10 bis 50 Gew.-Teile reaktive Aluminate und/oder
1 bis 10 Gew.-Teile Calciumsulfathalbhydrat und/oder
3 bis 25 Gew.-Teile Calciumsulfatanhydrit-II und/oder
4 bis 40 Gew.-Teile Calciumhydroxid und/oder
0,6 bis 3 Gew.-Teile organischen Abbindeverzögerer.

5. Schnellzement nach Anspruch 1 oder 2, gekennzeichnet durch

a. 55 bis 75 Gew.-Teile reaktive Calciumsilikate,
b. 9 bis 22 Gew.-Teile reaktive Aluminate,
c. 0,5 bis 6 Gew.-Teile Calciumsulfathalbhydrat,
d. 2 bis 9 Gew.-Teile Calciumsulfatanhydrit-II,
e. 3 bis 10 Gew.-Teile Calciumhydroxid,
f. 0,2 bis 2 Gew.-Teile organischen Abbindeverzögerer.

6. Schnellzement nach Anspruch 5, gekennzeichnet durch

60 bis 70 Gew.-Teile reaktive Calciumsilikate und/oder
12 bis 18 Gew.-Teile reaktive Aluminate und/oder
1 bis 4 Gew.-Teile Calciumsulfathalbhydrat und/oder
3 bis 6 Gew.-Teile Calciumsulfatanhydrit-II und/oder
4 bis 7 Gew.-Teile Calciumhydroxid und/oder
0,4 bis 1,2 Gew.-Teile organischen Abbindeverzögerer.

7. Schnellzement nach Anspruch 1, gekennzeichnet durch

a. 6 bis 35 Gew.-Teile reaktive Calciumsilikate,
b. 38 bis 60 Gew.-Teile reaktive Aluminate,
c. 2 bis 14 Gew.-Teile Calciumsulfathalbhydrat,
d. 8 bis 35 Gew.-Teile Calciumsulfatanhydrit-II,
e. 4 bis 20 Gew.-Teile Calciumhydroxid,
f. 0,5 bis 3,5 Gew.-Teile organischen Abbindeverzögerer.

8. Schnellzement nach Anspruch 2, gekennzeichnet durch

a. 6 bis 35 Gew.-Teile reaktive Calciumsilikate,
b. 38 bis 60 Gew.-Teile reaktive Aluminate,
c. 2 bis 14 Gew.-Teile Calciumsulfathalbhydrat,
d. 8 bis 35 Gew.-Teile Calciumsulfatanhydrit-II,
e. 10 bis 60 Gew.-Teile Calciumhydroxid,
f. 0,2 bis 4 Gew.-Teile organischen Abbindeverzögerer.

9. Schnellzement nach Anspruch 7, gekennzeichnet durch

10 bis 25 Gew.-Teile reaktive Calciumsilikate und/oder
42 bis 50 Gew.-Teile reaktive Aluminate und/oder
4 bis 10 Gew.-Teile Calciumsulfathalbhydrat und/oder
10 bis 25 Gew.-Teile Calciumsulfatanhydrit-II und/oder
8 bis 18 Gew.-Teile Calciumhydroxid und/oder
0,8 bis 4 Gew.-Teile organischen Abbindeverzögerer.

10. Schnellzement nach Anspruch 8, gekennzeichnet durch

10 bis 25 Gew.-Teile reaktive Calciumsilikate und/oder
42 bis 50 Gew.-Teile reaktive Aluminate und/oder

4 bis 10 Gew.-Teile Calciumsulfathalbhydrat und/oder
10 bis 25 Gew.-Teile Calciumsulfatanhydrit-II und/oder
12 bis 40 Gew.-Teile Calciumhydroxid und/oder
0,6 bis 3 Gew.-Teile organischen Abbindeverzögerer.

11. Schnellzement nach einem der Ansprüche 1 bis 10, dadurch gekennzeichnet, daß das Verhältnis der reaktiven Calciumsilikate zu den reaktiven Aluminaten entsprechend den erforderlichen Früh- und Endfestigkeiten eingestellt ist.

12. Schnellzement nach einem der Ansprüche 1 bis 11, dadurch abgewandelt, daß das Calciumsulfatanhydrit und/oder -halbhydrat zum Glätten der Formstufenänderung partiell durch Calciumsulfatdihydrat ersetzt ist.

13. Schnellzement nach einem der Ansprüche 1 bis 12, dadurch abgewandelt, daß das Calciumhydroxid ganz oder teilweise durch Calciumoxid ersetzt ist.

14. Schnellzement nach einem der Ansprüche 1 bis 13, dadurch abgewandelt, daß das Calciumhydroxid teilweise ersetzt ist durch ein lösliches Calciumcarbonat.

15. Schnellzement nach einem der Ansprüche 1 bis 14, dadurch abgewandelt, daß das Calciumhydroxid teilweise ersetzt ist durch lösliches, wasserhaltiges Magnesiumcarbonat.

16. Schnellzement nach einem der Ansprüche 1 bis 15, dadurch gekennzeichnet, daß er als organischen Abbindeverzögerer Oxycarbonsäure(n), insbesondere Zitronensäure, oder deren Salz(e) enthält.

17. Schnellzement nach einem der Ansprüche 1 bis 16, dadurch gekennzeichnet, daß das Verhältnis von b:e kleiner 5, vorzugsweise kleiner 3, eingestellt ist.

18. Schnellzement nach einem der Ansprüche 1 bis 17, dadurch gekennzeichnet, daß das Verhältnis der reaktiven Aluminate, berechnet als CA, zum Gesamtsulfatgehalt (Calciumsulfathalbhydrat, -anhydrit-II und gegebenenfalls -dihydrat) zwischen etwa 5:1 bis 1:1, vorzugsweise zwischen 3:1 und 2:1, liegt.

19. Schnellzement nach einem der Ansprüche 1 bis 18, dadurch gekennzeichnet, daß Beschleuniger in einer Menge bis 1 Gew.-Teil bezogen auf das Bindemittel zugesetzt ist.

20. Schnellzement nach Anspruch 19, gekennzeichnet durch einen Alkaligehalt, berechnet als $Na_2O$, unter 0,6 Gew.-Teilen.

21. Schnellzement nach einem der Ansprüche 1 bis 20, dadurch abgewandelt, daß die reaktiven Aluminate teilweise durch schwer lösliches Aluminiumsulfat ersetzt sind.

**Revendications**

1. Ciment prompt contenant des silicates de calcium réactifs et des aluminates réactifs, caractérisé en ce qu'il contient:

a. 6 à 75 parties en poids de silicates de calcium réactifs,
b. 9 à 60 parties en poids d'aluminates réactifs, calculés en CA,
c. 0,5 à 14 parties en poids de sulfate de calcium semi-hydraté et/ou d'anhydrite-III,
d. 2 à 46 parties en poids de sulfate de calcium de type anhydrite-II,
e. 3 à 20 parties en poids d'hydroxyde de calcium,
f. 0,2 à 3,5 parties en poids d'un retardateur de prise organique qui inhibe la germination et la croissance du sulfoaluminate de calcium hydraté,

le ciment prompt étant gâché dans un mélange, la chaîne réactionnelle passant par les produits suivants: ettringite primaire, monophases (monosulfoaluminate de calcium), ettringite secondaire et hydrosilicate de calcium.

2. Ciment prompt contenant des silicates de calcium réactifs et des aluminates réactifs, caractérisé en ce qu'il contient:

a. 6 à 75 parties en poids de silicates de calcium réactifs,
b. 9 à 60 parties en poids d'aluminates réactifs, calculés en CA,
c. 0,5 à 14 parties en poids de sulfate de calcium semi-hydraté et/ou d'anhydrite-III,
d. 2 à 46 parties en poids de sulfate de calcium de type anhydrite-II,
e. 3 à 60 parties en poids d'hydroxyde de calcium,
f. 0,2 à 4 parties en poids d'un retardateur de prise, organique, qui inhibe la germination et la croissance du sulfoaluminate de calcium hydraté,

le ciment prompt étant gâché dans deux mélanges, dans l'un desquels on procède à un pré-gâchage des aluminates réactifs, des retardateurs de prise organiques et des sulfates de calcium dans un environnement exempt de chaux éteinte, la chaîne réactionelle passant par les produits suivants: ettringite primaire, monophases (monosulfoaluminate de calcium), ettringite secondaire et hydrosilicate de calcium.

3. Ciment prompt selon la revendication 1, caractérisé par:

10 à 70 parties en poids de silicates de calcium réactifs, et/ou
10 à 50 parties en poids d'aluminates réactifs, et/ou
1 à 10 parties en poids de sulfate de calcium semi-hydraté et/ou
3 à 25 parties en poids de sulfate de calcium de type anhydrite-II et/ou
4 à 18 parties en poids d'hydroxyde de calcium, et/ou
0,4 à 3,5 parties en poids d'un retardateur de prise, organique.

4. Ciment prompt selon la revendication 2, caractérisé par:
10 à 70 parties en poids de silicates de calcium réactifs, et/ou
10 à 50 parties en poids d'aluminates réactifs, et/ou
1 à 10 parties en poids de sulfate de calcium semi-hydraté et/ou
3 à 25 parties en poids de sulfate de calcium de type anhydrite-II et/ou
4 à 40 parties en poids d'hydroxyde de calcium, et/ou
0,6 à 3 parties en poids d'un retardateur de prise, organique.

5. Ciment prompt selon la revendication 1 ou 2, caractérisé par:
a. 55 à 75 parties en poids de silicates de calcium réactifs,
b. 9 à 22 parties en poids d'aluminates réactifs,
c. 0,5 à 6 parties en poids de sulfate de calcium semi-hydraté
d. 2 à 9 parties en poids de sulfate de calcium de type anhydrite-II
e. 3 à 10 parties en poids d'hydroxyde de calcium,
f. 0,2 à 2 parties en poids d'un retardateur de prise, organique.

6. Ciment prompt selon la revendication 5, caractérisé par:
60 à 70 parties en poids de silicates de calcium réactifs, et/ou
12 à 18 parties en poids d'aluminates réactifs, et/ou
1 à 4 parties en poids de sulfate de calcium semi-hydraté et/ou
3 à 6 parties en poids de sulfate de calcium de type anhydrite-II et/ou
4 à 7 parties en poids d'hydroxyde de calcium, et/ou
0,4 à 1,2 parties en poids d'un retardateur de prise, organique.

7. Ciment prompt selon la revendication 1, caractérisé par:
a. 6 à 35 parties en poids de silicates de calcium réactifs,
b. 38 à 60 parties en poids d'aluminates réactifs,
c. 2 à 14 parties en poids de sulfate de calcium semi-hydraté
d. 8 à 35 parties en poids de sulfate de calcium de type anhydrite-II
e. 4 à 20 parties en poids d'hydroxyde de calcium,
f. 0,5 à 3,5 parties en poids d'un retardateur de prise, organique.

8. Ciment prompt selon la revendication 2, caractérisé par:
a. 6 à 35 parties en poids de silicates de calcium réactifs,
b. 38 à 60 parties en poids d'aluminates réactifs,
c. 2 à 14 parties en poids de sulfate de calcium semi-hydraté
d. 8 à 35 parties en poids de sulfate de calcium de type anhydrite-II
e. 10 à 60 parties en poids d'hydroxyde de calcium,
f. 0,2 à 4 parties en poids d'un retardateur de prise, organique.

9. Ciment prompt selon la revendication 7, caractérisé par:
10 à 25 parties en poids de silicates de calcium réactifs, et/ou
42 à 50 parties en poids d'aluminates réactifs, et/ou
4 à 10 parties en poids de sulfate de calcium semi-hydraté et/ou
10 à 25 parties en poids de sulfate de calcium type anhydrite-II et/ou
8 à 18 parties en poids d'hydroxyde de calcium, et/ou
0,8 à 3,5 parties en poids d'un retardateur de prise, organique.

10. Ciment prompt selon la revendication 8, caractérisé par:
10 à 25 parties en poids de silicates de calcium réactifs, et/ou
42 à 50 parties en poids d'aluminates réactifs, et/ou
4 à 10 parties en poids de sulfate de calcium semi-hydraté et/ou
10 à 25 parties en poids de sulfate de calcium de type anhydrite-II et/ou
12 à 40 parties en poids d'hydroxyde de calcium et/ou
0,6 à 3 parties en poids d'un retardateur de prise, organique.

11. Ciment prompte selon l'une des revendications 1 à 10, caractérisé en ce que le rapport des silicates de calcium réactifs aux aluminates réactifs est ajusté selon les valeurs nécessaires de la résistance initiale et de la résistance finale.

12. Ciment prompt selon l'une des revendications 1 à 11, caractérisé en ce que le sulfate de calcium type anhydrite et/ou semi-hydraté est, pour lisser la variation de forme, partiellement remplacé par du sulfate de calcium dihydraté.

13. Ciment prompt selon l'une des revendiations 1 à 12, caractérisé en ce que l'hydroxyde de calcium est en totalité ou en partie remplacé par de l'oxyde de calcium.

14. Ciment prompt selon l'une des revendications 1 à 13, caractérisé en ce que l'hydroxyde de calcium est partiellement remplacé par un carbonate de calcium soluble.

15. Ciment prompt selon l'une des revendications 1 à 14, caractérisé en ce que l'hydroxyde de calcium est partiellement remplacé par au carbonate de magnésium hydraté soluble.

16. Ciment prompt selon l'une des revendications 1 à 15, caractérisé en ce qu'il contient comme accélateur de prise organique un ou plusieurs acides oxycarboxyliques, en particulier de l'acide citrique, ou leur(s) sel(s).

17. Ciment prompt selon l'un des revendications 1 à 16, caractérisé en ce que le rapport b:e est ajusté à

une valeur inférieure à 5, de préférence inférieure à 3.

18. Ciment prompt selon l'une des revendications 1 à 17, caractérisé en ce que le rapport entre les aluminates réactifs, calculés en CA, et la teneur en sulfates totaux (sulfate de calcium semi-hydraté, anhydrite-II et éventuellement dihydraté) est compris entre environ 5:1 et 1:1, de préférence entre 3:1 et 2:1.

19. Ciment prompt selon l'une des revendications 1 à 18, caractérisé en ce que l'accélérateur est ajouté en une quantité allant jusqu'à 1 partie en poids par rapport au liant.

20. Ciment prompt selon la revendication 19, caractérisé en ce qu'il a une teneur en métaux alcalins, calculée en $Na_2O$, inférieure à 0,6 partie en poids.

21. Ciment prompt selon l'une des revendications 1 à 20, caractérisé en ce que les aluminates réactifs sont partiellement remplacés par un sulfate d'aluminium difficilement soluble.

**Claims**

1. A quick-setting cement containing reactive calcium silicates and reactive aluminates, characterised by a content of

a. 6 to 75 parts by weight of reactive calcium silicates,
b. 9 to 60 parts by weight of reactive aluminates calculated as CA,
c. 0.5 to 14 parts by weight of calcium sulphate hemihydrate and/or anhydrite-III,
d. 2 to 46 parts by weight of calcium sulphate anhydrite-II,
e. 3 to 20 parts by weight of calcium hydroxide and
f. 0.2 to 3.5 parts by weight of an organic setting retarder which inhibits nucleation and the growth of hydrated calcium aluminate sulphate,

the quick-setting cement being mixed with water and a reaction chain occurring via the following products: primary ettringite, monophases (calcium aluminate monosulphate), secondary ettringite and calcium hydrosilicate.

2. A quick-setting cement containing reactive calcium silicates and reactive aluminates, characterised by a content of

a. 6 to 75 parts by weight of reactive calcium silicates,
b. 9 to 60 parts by weight of reactive aluminates calculated as CA,
c. 0.5 to 14 parts by weight of calcium sulphate hemihydrate and/or anhydrite-III
d. 2 to 46 parts by weight of calcium sulphate anhydrite-II,
e. 3 to 60 parts by weight of calcium hydroxide and
f. 0.2 to 4 parts by weight of organic setting retarder which inhibits nucleation and the growth of hydrated calcium aluminate sulphate,

the quick-setting cement being formed into two mixtures, in one of which the reactive aluminates, the organic setting retarder and the calcium sulphates are pre-mixed in an environment free from line hydrate, and a reaction chain occurring via the following products: primary ettringite, monophases (calcium aluminate monosulphate), secondary ettringite and calcium hydrosilicate.

3. A quick-setting cement according to claim 1, characterised by
10 to 70 parts by weight of reactive calcium silicates and/or
10 to 50 parts by weight of reactive aluminates and/or
1 to 10 parts by weight of calcium sulphate hemihydrate and/or
3 to 25 parts by weight of calcium sulphate anhydrite-II and/or
4 to 18 parts by weight of calcium hydroxide and/or
0.4 to 3.5 parts by weight of organic setting retarder.

4. A quick-setting cement according to claim 2, characterised by
10 to 70 parts by weight of reactive calcium silicates and/or
10 to 50 parts by weight of reactive aluminates and/or
1 to 10 parts by weight of calcium sulphate hemihydrate and/or
3 to 25 parts by weight of calcium sulphate anhydrite-II and/or
4 to 40 parts by weight of calcium hydroxide and/or
0.6 to 3 parts by weight of organic setting retarder.

5. A quick-setting cement according to claim 1 or 2, characterised by
a. 55 to 75 parts by weight of reactive calcium silicates,
b. 9 to 22 parts by weight of reactive aluminates,
c. 0.5 to 6 parts by weight of calcium sulphate hemihydrate,
d. 2 to 9 parts by weight of calcium sulphate anhydrite-II,
e. 3 to 10 parts by weight of calcium hydroxide and
f. 0.2 to 2 parts by weight of organic setting retarder.

6. A quick-setting cement according to claim 5, characterised by
60 to 70 parts by weight of reactive calcium silicates and/or
12 to 18 parts by weight of reactive aluminates and/or
1 to 4 parts by weight of calcium sulphate hemihydrate and/or
3 to 6 parts by weight of calcium sulphate anhydrite-II and/or

4 to 7 parts by weight of calcium hydroxide and/or
0.4 to 1.2 parts by weight of organic setting retarder.

7. A quick-setting cement according to claim 1, characterised by
a. 6 to 35 parts by weight of reactive calcium silicates,
b. 38 to 60 parts by weight of reactive aluminates,
c. 2 to 14 parts by weight of calcium sulphate hemihydrate,
d. 8 to 35 parts by weight of calcium sulphate anhydrite-II,
e. 4 to 20 parts by weight of calcium hydroxide and
f. 0.5 to 3.5 parts by weight of organic setting retarder.

8. A quick-setting cement according to claim 2, characterised by
a. 6 to 35 parts by weight of reactive calcium silicates,
b. 38 to 60 parts by weight of reactive aluminates,
c. 2 to 14 parts by weight of calcium sulphate hemihydrate,
d. 8 to 35 parts by weight of calcium sulphate anhydrite-II,
e. 10 to 60 parts by weight of calcium hydroxide and
f. 0.2 to 4 parts by weight of organic setting retarder.

9. A quick-setting cement according to claim 7, characterised by
10 to 25 parts by weight of reactive calcium silicates and/or
42 to 50 parts by weight of reactive aluminates and/or
4 to 10 parts by weight of calcium sulphate hemihydrate and/or
10 to 25 parts by weight of calcium sulphate anhydrite-II and/or
8 to 18 parts by weight of calcium hydroxide and/or
0.8 to 3.5 parts by weight of organic setting retarder.

10. A quick-setting cement according to claim 8, characterised by
10 to 25 parts by weight of reactive calcium silicates and/or
42 to 50 parts by weight of reactive alumintes and/or
4 to 10 parts by weight of calcium sulphate hemihydrate and/or
10 to 25 parts by weight of calcium sulphate anhydrite-II and/or
12 to 40 parts by weight of calcium hydroxide and/or
0.6 to 3 parts by weight of organic setting retarder.

11. A quick-setting cement according to any of claims 1 to 10, characterised in that the proportion of reactive calcium silicates to reactive aluminates is adjusted in accordance with the required early and final strengths.

12. A quick-setting cement according to any of claims 1 to 11, characterised in that the calcium sulphate anhydrite and/or hemihydrate is partially replaced by calcium sulphate dihydrate in order to smoothe the stages of deformation.

13. A quick-setting cement according to any of claims 1 to 12, characterised in that the calcium hydroxide is partly or completely replaced by calcium oxide.

14. A quick-setting cement according to any of claims 1 to 13, characterised in that the calcium hydroxide is partly replaced by a soluble calcium carbonate.

15. A quick-setting cement according to any of claims 1 to 14, characterised in that the calcium hydroxide is partly replaced by soluble hydrated magnesium carbonate.

16. A quick-setting cement according to any of claims 1 to 15, characterised in that the organic setting retarder therein comprises one or more hydroxycarboxylic acids, more particularly citric acid, or salts thereof.

17. A quick-setting cement according to any of claims 1 to 16, characterised in that the ratio b:e is set at less than 5, preferably less than 3.

18. A quick-setting cement according to any of claims 1 to 17, characterised in that the ratio of reactive aluminates, calculated as CA, to the total sulphate content (calcium sulphate hemihydrate, anhydrite-II and dihydrate if any) is between about 5:1 and 1:1, preferably between 3:1 and 2:1.

19. A quick-setting cement according to any of claims 1 to 18, characterised in that an accelerator is added in a proportion of 1 part by weight relative to the binder.

20. A quick-setting cement according to claim 19, characterised by an alkali content, calculated as $Na_2O$, of less than 0.6 parts by weight.

21. A quick-setting cement according to any of claims 1 to 20, characterised in that the reactive aluminates are partly replaced by difficultly-soluble aluminium sulphate.

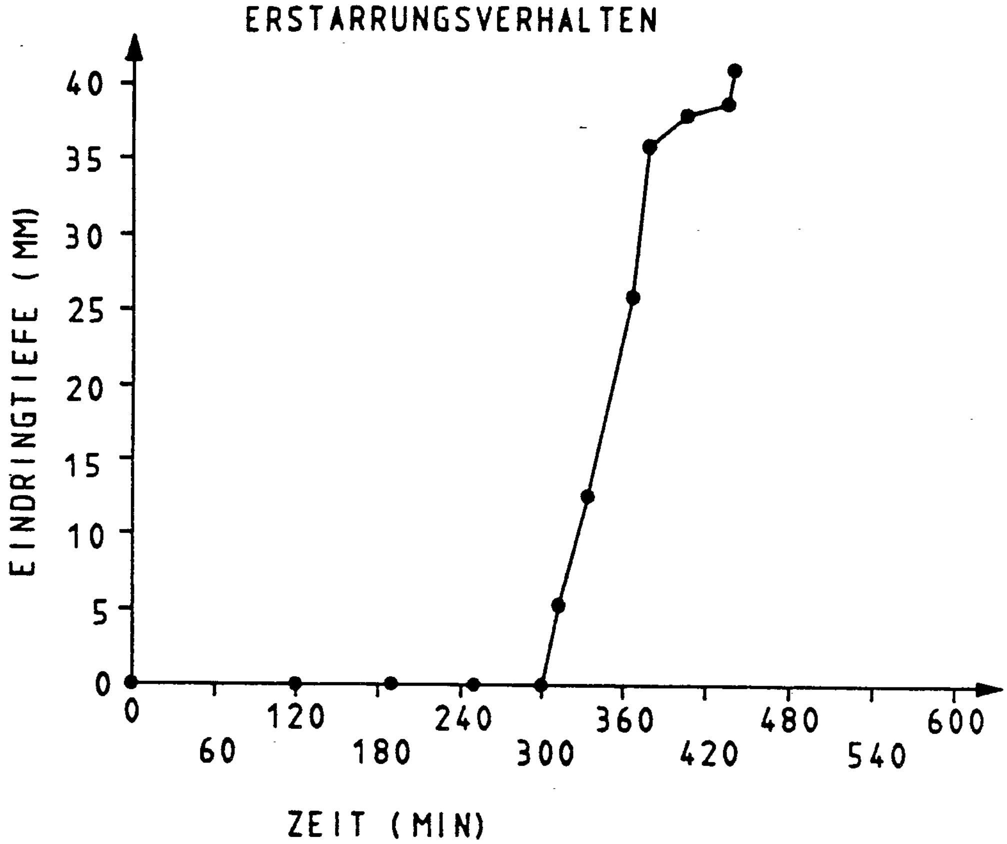
ERSTARRUNGSVERHALTEN
EINDRINGTIEFE (MM)
0
5
10
15
20
25
30
35
40
0
60
120
180
240
300
360
420
480
540
600
ZEIT (MIN)

FIG. 1

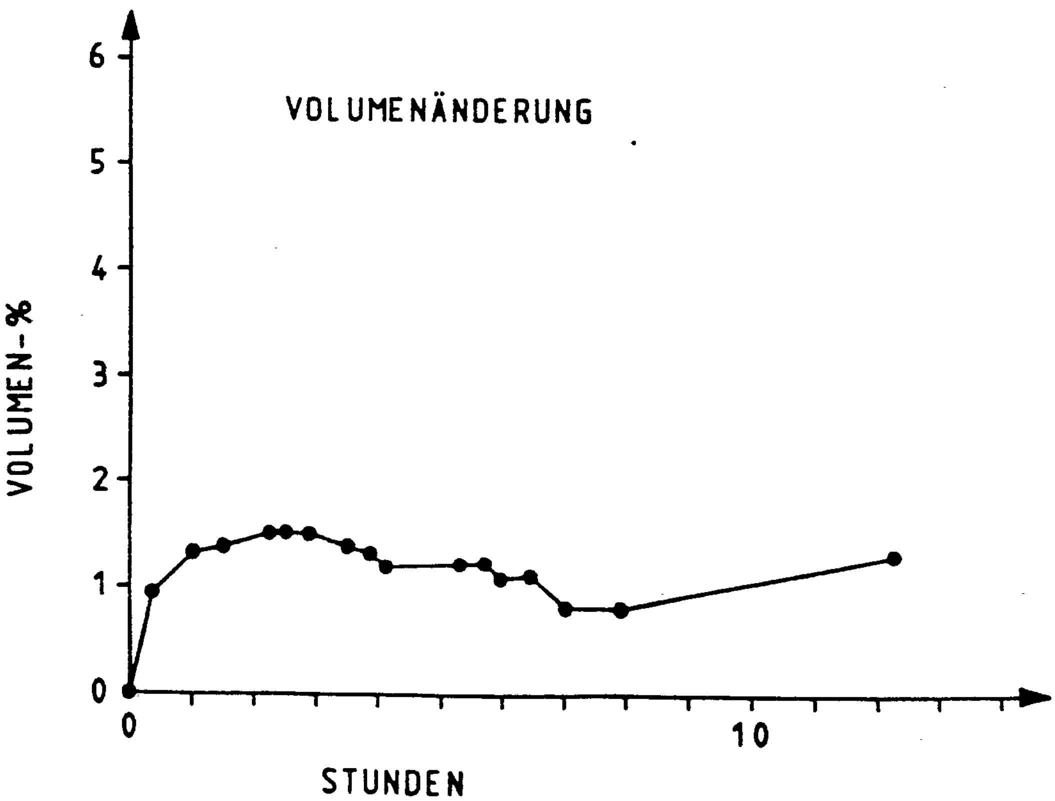
VOLUMENÄNDERUNG
VOLUMEN-%
0
1
2
3
4
5
6
0
10
STUNDEN

FIG. 2